# EUROPÄISCHE PATENTSCHRIFT

(11) **EP 4 388 868 B1**
(45) Veröffentlichungstag und Bekanntmachung des Hinweises auf die Patenterteilung: **08.04.2026**
(21) Anmeldenummer: 23219638.6
(22) Anmeldetag: 22.12.2023
(51) Int. Cl.: A01K 1/01, A01K 1/015

(54) **HAUSTIER-SANITÄREINRICHTUNG**
PET SANITARY DEVICE
DISPOSITIF SANITAIRE POUR ANIMAUX DOMESTIQUES

(30) Priorität: 23.12.2022 DE 202022107230 U
(43) Veröffentlichungstag der Anmeldung: 26.06.2024
(73) Patentinhaber: Seilheimer-Wittmann, Joachim, 58093 Hagen (DE)
(72) Erfinder: Seilheimer-Wittmann, Joachim, 58093 Hagen (DE)
(74) Vertreter: Andrejewski - Honke Patent- und Rechtsanwälte Partnerschaft mbB

(56) Entgegenhaltungen:
- EP-A1- 3 707 998
- CH-A5- 688 428
- CN-A- 105 638 488
- DE-A1- 102006 020 653
- DE-U1- 8 900 398
- FR-A1- 2 748 896
- FR-A1- 3 046 028
- KR-A- 20130 112 418
- US-A1- 2004 261 727
- US-A1- 2013 112 149
- US-B1- 10 383 306

## Beschreibung

Die Erfindung betrifft eine Haustier-Sanitäreinrichtung, insbesondere Katzentoilette, mit einer quaderförmigen wannenartigen Basis, und mit einem Sieb zur Aufnahme eines fäkalienbindenden Streuguts, wobei das Sieb die Basis im Wesentlichen in einem ersten nach oben hin offenen Bereich und einen zweiten darunterliegenden geschlossenen Bereich unterteilt, wobei ferner der zweite Bereich mit zumindest einer Schublade ausgerüstet ist, in welcher durch Öffnungen im Sieb gelangende Streugutbestandteile gesammelt werden können, und wobei das Sieb gegenüber der wannenartigen Basis hin- und herbewegbar ausgebildet ist.

Haustier-Sanitäreinrichtungen werden in ganz unterschiedlichen Ausprägungen im Stand der Technik beschrieben. So befasst sich das Gebrauchsmuster CN 216088198 U mit einer solchen Haustier-Sanitäreinrichtung, bei welcher eine Wanne durch Schwenken das mit Fäkalien belastete Streugut aussortiert.

Bei der CN 216452516 U wird mit einem Sieb bei einer Katzentoilette gearbeitet, welches im Innern einer trommelförmigen und nicht quaderförmigen Wanne angeordnet ist.

Die Gebrauchsmusterschrift CN 216533119 U arbeitet mit einem Sieb, welches zusätzlich mit einer Art Schütteleinrichtung ausgerüstet ist. Die Schütteleinrichtung kann auch für eine Schrägstellung des Siebes sorgen.

Bei dem Gebrauchsmuster entsprechend der DE 20 2006 004 416 U wird so vorgegangen, dass mit einem Gitter gearbeitet wird, welches seitlich versetzt angeordnet ist. Die automatische oder semiautomatische Katzentoilette entsprechend der DE 693 17 876 T2 geht so vor, dass eine Transporteinrichtung zum Bewegen einer Abfallentfernungseinrichtung vorgesehen ist.

Im Rahmen des nächstkommenden und gattungsbildenden Standes der Technik nach der US 2004/0261727 A1 geht es um eine Streubox für Haustiere, die einfach zu reinigen ist und die Zeit zum Austausch des Streugutes verringern soll. Dazu ist ein Sieb oberhalb einer Wanne vorgesehen, welches über Schlitze verfügt und fest montiert ist.

Bei der FR 3 046 028 A1 geht es um eine Haustier-Sanitäreinrichtung, die mit einem grundsätzlich bewegbaren Sieb arbeitet. Zusätzlich ist eine Handschaufel vorgesehen.

Unter Zugrundelegung des weiteren Standes der Technik nach der CN 216533119 U fällt auf, dass bisherige Ausführungsformen einer solchen Haustier-Sanitäreinrichtung zwar eine mehr oder minder wirksame Aussortierung von mit Fäkalien belastetem Streugut durch ein Sieb ermöglichen. Die Handhabung des ausgesonderten und mit Fäkalien belasteten Streuguts ist allerdings wenig komfortabel. Außerdem sind nur bestimmte granulare Streugüter geeignet. Hier will die Erfindung insgesamt Abhilfe schaffen.

Der Erfindung liegt das technische Problem zugrunde, eine derartige Haustier-Sanitäreinrichtung so weiterzuentwickeln, dass die Handhabung und Entsorgung von mit Fäkalien belastetem Streugut gegenüber dem Stand der Technik vereinfacht ist und besonders komfortabel vorgenommen werden kann.

Zur Lösung dieser technischen Problemstellung schlägt die Erfindung bei einer gattungsgemäßen Haustier-Sanitäreinrichtung vor, dass die Öffnungen im Sieb als langgestreckte Schlitze bestimmter Schlitzbreite ausgebildet sind, wobei die Schlitze bogenförmig ausgebildet sind, und wobei die Schlitze in Querrichtung des Siebes mit jeweils abwechselnder Krümmung angeordnet sind sowie mit Abstand aneinander anschließen.

Da darüber hinaus die Schublade aus dem fraglichen geschlossenen Bereich unterhalb des Siebes problemlos entfernt und in diese Bereich wieder eingesetzt werden kann, gelingt die Entsorgung des mit Fäkalien belasteten Streuguts besonders einfach und komfortabel. Dazu ist es lediglich erforderlich, dass die zumindest eine Schublade entleert und gegebenenfalls gereinigt wird. Zu diesem Zweck sind die fragliche Haustier-Sanitäreinrichtung bzw. die wannenartige Basis und auch die Schublade in der Regel aus Kunststoff hergestellt. Grundsätzlich kann die Basis aber auch aus Holz oder einem (nicht rostenden) Metall gefertigt werden. Auch Holz-Kunststoff-Laminate wie beispielsweise HPL (unter Hochdruck verpresstes Laminat) sind zur Herstellung der Wanne und der Schublade denkbar und können Verwendung finden.

In diesem Fall kommt beispielsweise Papier oder eine Spanplatte zum Einsatz, die in Melaminharz getränkt und unter Druck sowie gegebenenfalls Temperatur verpresst wird. Auch Kombinationen sind in diesem Zusammenhang denkbar, beispielsweise Kunststoff und Metall oder unter Hochdruck verpresste Kunststoff-Holz-Aufbauten etc.

Demgegenüber ist das Sieb in der Regel metallisch ausgebildet, wobei meistens ein nicht rostender Stahl zum Einsatz kommt. Das empfiehlt sich insbesondere vor dem Hintergrund, dass die erfindungsgemäße Haustier-Sanitäreinrichtung im Regelfall mit einem speziellen Fäkalien bindenden Streugut kombiniert und ausgerüstet wird. Das heißt, im Gegensatz zum Stand der Technik, der an dieser Stelle oftmals mit mineralisch basierten Streugutkörnern arbeitet, die beispielsweise Bentonite oder andere Tone, Porenbeton oder durch Blähen porosierte Mörtelpartikel einsetzen (DE 20 2008 013 262 U1) greift die Erfindung ausdrücklich auf ein Streugut zurück, welches durch flüssige Fäkalien in eine mehlartige Substanz zerfällt.

Die mehlartige Substanz liegt dabei überwiegend in Form von kleinkörnigen Konglomeraten vor, die die Öffnungen im Sieb passieren bzw. passieren können. Die Konglomerate setzen sich dabei aus dem meistens pflanzenbasierten Streugut und den flüssigen Fäkalien zusammen. Auf diese Weise sammeln sich die kleinkörnigen Konglomerate in der Schublade und können besonders einfach und wirkungsvoll entsorgt werden. Auch besteht die Möglichkeit, das demgegenüber feste Fäkalien von den Öffnungen des Siebes zurückgehalten und hierdurch vom Sieb entfernt werden können, beispielsweise mit einer Schaufel oder einem anderen mechanischen Hilfsmittel. Dabei hat es sich ganz besonders als günstig erwiesen, wenn das fragliche Streugut pflanzenbasiert ausgebildet ist. Beispielsweise wird das Streugut typischerweise aus Holz oder Sträuchern hergestellt. Außerdem hat es sich in diesem Zusammenhang als besonders günstig erwiesen, wenn das Streugut pelletisiert ist bzw. pelletisiert wird.

Grundsätzlich ist beispielsweise Streugut respektive Tier-Einstreu in Form von beispielsweise Holzpellets oder auch Holzspänen, Pflanzenspänen etc. bekannt, wie das Gebrauchsmuster DE 20 2012 102 286 U1 zeigt. Allerdings setzt die Erfindung das durch flüssige Fäkalien in die mehlartige Substanz zerfallende und als kleinkörnige Konglomerate vorliegende Streugut besonders vorteilhaft in Verbindung mit der beschriebenen Haustier-Sanitäreinrichtung und insbesondere Katzentoilette ein. Hierbei geht die Erfindung von der Erkenntnis aus, dass das fragliche und pflanzenbasierte sowie in Gestalt von Pellets, Spänen oder Schnipseln vorliegende Streugut durch die Aufnahme insbesondere flüssiger Fäkalien seine Korngröße verringert. Dadurch kommt es zu der mehlartigen Substanz, die nach Aufnahme der flüssigen Fäkalien problemlos die Öffnungen im Sieb passieren kann. Die im unterhalb des Siebes vorgesehene zumindest eine Schublade ist nun in der Lage, diese kleinkörnigen Konglomerate mit den darin gebundenen flüssigen Fäkalien zu sammeln.

Demgegenüber verbleiben die festen Fäkalien auf der Oberfläche des Siebes und können in der Regel die Öffnungen des Siebes nicht passieren. Dadurch lassen sie sich problemlos von dem dort nach wie vor vorhandenen pflanzenbasierten Streugut trennen. Als Folge hiervon kommt nicht nur ein besonders kostengünstiges Streugut auf Pflanzenbasis zum Einsatz, sondern ist darüber hinaus eine einwandfreie Trennung von flüssigen und festen Fäkalien möglich und wird der Verbrauch an Streugut gegenüber dem Stand der Technik optimiert und insbesondere verringert.

Denn die flüssigen Fäkalien werden zusammen mit dem speziellen pflanzenbasierten Streugut in Gestalt der kleinkörnigen Konglomerate in der Schublade nach Passieren der Öffnungen im Sieb gesammelt und können mithilfe der Schublade problemlos entsorgt werden. Gleiches gilt für die festen Fäkalien, die auf der Oberfläche des Siebes zurückgehalten werden und die Öffnungen nicht passieren können. Die fraglichen festen Fäkalien können mechanisch beispielsweise mithilfe einer Schaufel oder anderweitig von dem Streugut getrennt und separat entsorgt werden. Dadurch wird der Verbrauch an Streugut minimiert und kann auf ein besonders preisgünstig und praktisch in beliebiger Menge zur Verfügung stehendes pflanzenbasiertes Streugut zurückgegriffen werden.

Hinzu kommt, dass die erfindungsgemäße Haustier-Sanitäreinrichtung in Kombination mit dem speziellem Streugut besonders ressourcenschonend arbeitet, weil das pflanzenbasierte Streugut auf Basis der Pellets, Schnipsel, Späne oder Körner von Holz oder Sträuchern in der Regel wohnortnah für Tierhalter zur Verfügung steht und im Unterschied zu beispielsweise mineralischem Katzenstreu auf Basis von Bentonit entsprechend der DE 20 2008 013 262 U1 nicht importiert und aufbereitet werden muss.

Hinzu kommt, dass solche mineralisch basierten Streugüter flüssige Fäkalien in ihrem Innern aufnehmen und dadurch quellen, allerdings nicht in eine mehlartige Substanz wie das erfindungsgemäße Streugut zerfallen. Dadurch können solche mineralisch basierten Streugutpartikel in Kombination mit der erfindungsgemäßen Haustier-Sanitäreinrichtung regelmäßig nicht eingesetzt werden, weil sie die beschriebene Trennung durch das Sieb nicht zulassen bzw. die fraglichen mineralischen Streugutpartikel die Öffnungen des Siebes regelmäßig nicht passieren können.

Das heißt, die Öffnungen des Siebe sind größenmäßig so ausgelegt und konzipiert, dass das erfindungsgemäß eingesetzte pflanzenbasierte Streugut nach Aufnahme der flüssigen Fäkalien und dem Übergang in die mehlartige Substanz mit den kleinkörnigen Konglomeraten die fraglichen Öffnungen problemlos passieren kann. Hier haben sich beispielsweise Schlitzweiten der Öffnungen von allenfalls einigen Millimetern, insbesondere solche unterhalb von 5 mm und vorzugsweise unterhalb von 2 mm als besonders günstig erwiesen. Generell lässt sich die beschriebene Haustier-Sanitäreinrichtung gleichwohl auch mit mineralischen Streugut beschichten wenn auch nicht bevorzugt.

Im Ergebnis wird eine Haustier-Sanitäreinrichtung und insbesondere Katzentoilette zur Verfügung gestellt, die in Kombination mit einem pflanzenbasierten Streugut eine kostengünstige, komfortable und zugleich ressourcenschonende Entsorgung der Fäkalien zur Verfügung stellt. Zum ersten Mal ist es problemlos möglich, flüssige und feste Fäkalien einwandfrei voneinander zu trennen. Denn die flüssigen Fäkalien überführen das pflanzenbasierte und in der Regel als Pellets, Späne, Schnipsel oder dergleichen vorliegende pflanzenbasierte Streugut in den mehlartigen Zustand bzw. in eine mehlartige Substanz mit kleinkörnigen Konglomeraten, die nach der Aufnahme der flüssigen Fäkalien die Öffnungen des Siebes passieren können. Dadurch kann das mit den flüssigen Fäkalien belastete Streugut in der unterhalb des Siebes vorhandenen Schublade gesammelt und durch Entfernen aus dieser Schublade entsorgt werden. Zugleich bleiben feste Fäkalien auf der Oberfläche des Siebes zurück, weil sie die Schlitze in den Öffnungen nicht passieren können. Tatsächlich werden an dieser Stelle mit Schlitzbreiten von unter 5 mm und meistens sogar von 2 mm und weniger beobachtet. Dadurch lassen sich die festen Fäkalien problemlos von dem auf der Oberfläche verteilten Streugut trennen.

Das alles gelingt unter Rückgriff auf kostengünstiges und in praktisch beliebiger Menge zur Verfügung stehendes pflanzenbasiertes Streugut, welches nämlich beispielsweise aus Holz oder Sträuchern gewonnen wird und oftmals als Abfall in Sägewerken, Forstbetrieben etc. zur Verfügung steht. Hierin sind die wesentlichen Vorteile zu sehen.

Erfindungsgemäß sind die Öffnungen im Sieb als langgestreckte Schlitze der zuvor bereits angesprochenen Schlitzbreite ausgebildet. Solche langgestreckten Schlitze bietet den Vorteil gegenüber beispielsweise runden Öffnungen, dass sie besonders wirksam die kleinförmigen Konglomerate des mit flüssigen Fäkalien belasteten pflanzenbasierten Streuguts aufzunehmen und in die darunter befindliche Schublade einzuleiten in der Lage sind. Dieser Vorgang wird noch dadurch begünstigt, dass die Schlitze erfindungsgemäß bogenförmig ausgebildet sind. Hierbei geht die Erfindung von der Erkenntnis aus, dass durch die Bogenform das Ausschleusen der kleinkörnigen Konglomerate des mit flüssigen Fäkalien belasteten pflanzenbasierten Streuguts besonders wirksam gelingt und zur Verfügung gestellt wird, weil das die betreffende Sanitäreinrichtung nutzende Haustier für entsprechende Bewegungen des Streuguts auf dem Sieb sorgt oder solche Bewegungen ergänzend von einem Nutzer oder anderweitig in das Streugut eingetragen werden können. Die bogenförmige Gestaltung der Schlitze verhindert darüber hinaus, dass sich das Streugut in den fraglichen Schlitzen festsetzt und diese verstopft.

Darüber hinaus ist die Auslegung so getroffen, dass mehrere Schlitze in Querrichtung des Siebes jeweils mit Abstand aneinander anschließen. Außerdem sind die Schlitze erfindungsgemäß in der Querrichtung mit jeweils abwechselnder Krümmung angeordnet, um erneut das Ausschleusen der kleinkörnigen Konglomerate nach dem Übergang des Streuguts durch die flüssigen Fäkalien in die mehlartige Substanz zu erleichtern.

Die zuvor bereits beschriebenen Bewegungen des Streuguts gegenüber dem Sieb lassen sich noch dadurch intensivieren, dass das Sieb gegenüber der Wanne erfindungsgemäß hin- und herbewegbar ausgebildet ist. Zu diesem Zweck kann ein Antrieb für das Sieb vorgesehen sein. Mithilfe des Antriebes lässt sich das Sieb im Regelfall in seiner Längsrichtung hin- und herbewegen. Quer zu dieser Längsrichtung, das heißt in der Querrichtung, verlaufen demgegenüber die bogenförmigen Schlitze, sodass es hierdurch besonders wirkungsvoll zu dem Eintrag der kleinkörnigen Konglomerate des mit flüssigen Fäkalien belasteten pflanzenbasierten Streuguts in die darunter liegende Schublade kommt. Der Antrieb für das Sieb verfügt in der Regel über wenigstens einen mit dem Sieb verbundenen Exzenter.

Außerdem kann der Antrieb durch eine Steuereinheit im Hinblick auf seine Drehzahl und/oder Drehrichtung veränderbar ausgebildet werden. Dadurch kann durch eine Variation von Drehzahl und Drehrichtung der Struktur des Streuguts, beispielsweise der Größe der einzelnen Pellets, Späne oder Schnipsel sowie uhrem Verschmutzungsgrad Rechnung getragen werden. Es versteht sich, dass der Motor als Bestandteil des Antriebes in diesem Zusammenhang netzbetrieben ausgebildet sein kann. Ebenso ist eine Variante mit einem Akkumulator denkbar.

Das Sieb ist im Allgemeinen plattenförmig und metallisch ausgebildet. Dabei kommt aus Gründen der Hygiene im Allgemeinen ein nicht rostendes Metall zur Realisierung des Siebes zum Einsatz. Als Folge hiervon lässt sich das Sieb mit den hierin eingebrachten schlitzartigen Öffnungen einfach und kostengünstig bearbeiten, beispielsweise lassen sich die Öffnungen zusammengenommen in einem einzügigen Stanzprozess in das Sieb einbringen. Ganz besonders bevorzugt, erfolgt die Bearbeitung des Siebes und das Einbringen der Öffnung allerdings nicht in einem Stanzprozess, sondern durch Laserstrahlen und/oder Wasserstrahlen.

Auf diese Weise entfallen etwaige Werkzeugkosten und lassen sich individuelle Auslegungen und Abmaße realisieren und umsetzen. Außerdem entfällt eine etwaige Entgratung der Konturen der Öffnungen und kann dadurch die beanspruchte Haustier-Sanitäreinrichtung besonders einfach und flexibel an unterschiedliche Anforderungen angepasst und dementsprechend produziert werden.

Wie einleitend bereits erläutert, kann die Basis aus Kunststoff, Holz oder Metall oder auch einem Laminat hergestellt werden. Außerdem ist die Schublade im Allgemeinen mit Seitenwänden ausgerüstet, die zumindest oberseitig nach innen abgeschrägt sind. Hierdurch wird gewährleistet, dass die kleinkörnigen Konglomerate des in der mehlartigen Substanz vorliegenden pflanzenbasierten Streuguts möglichst rückstandsfrei einen Boden der Schublade erreichen und nicht beispielsweise an den Seitenwänden der Schublade "hängen" bleiben.

Hierzu trägt ergänzend bei, dass die Schublade mit einer glatten und leicht zu reinigenden Oberfläche ausgerüstet ist. Der an dieser Stelle realisierte Schrägwinkel beträgt im Allgemeinen ca. 45°.

Nachfolgend wird die Erfindung anhand einer lediglich ein Ausführungsbeispiel darstellenden Zeichnung näher erläutert; es zeigen:
- Fig. 1: eine erfindungsgemäße Haustier-Sanitäreinrichtung in einer perspektivischen Übersicht,
- Fig. 2: das in diesem Zusammenhang eingesetzte Sieb in Aufsicht und
- Fig. 3: eine abgewandelte Ausführungsform der Haustier-Sanitäreinrichtung nach Fig. 1 in Gestalt einer Eckvariante.

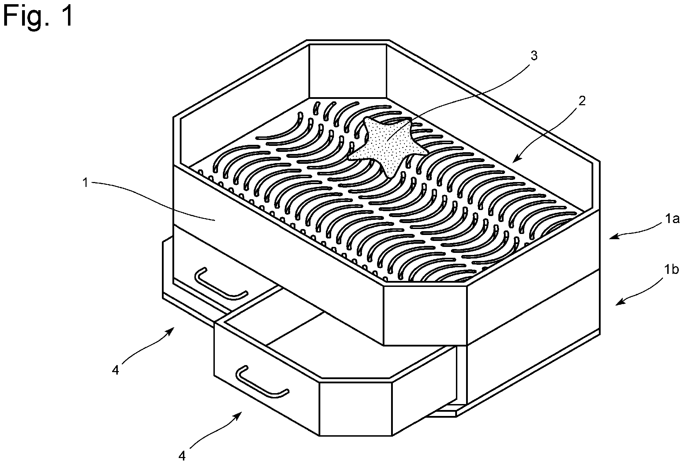

In den Figuren ist eine Haustier-Sanitäreinrichtungen und insbesondere Katzentoilette dargestellt und wiedergegeben. Diese verfügt in ihrem grundsätzlichen Aufbau über eine wannenartige quaderförmige Basis 1 und ein in der wannenartigen Basis 1 aufgenommenes bzw. in diese eingelegtes Sieb 2. Das Sieb 2 dient zur Aufnahme eines Fäkalien bindenden Streuguts 3, welches lediglich in der Fig. 1 schematisch angedeutet ist. Das Sieb 2 unterteilt die Basis 1 im Wesentlichen in einen ersten nach oben hin offenen Bereich 1a und einem zweiten darunterliegenden geschlossenen Bereich 1b.

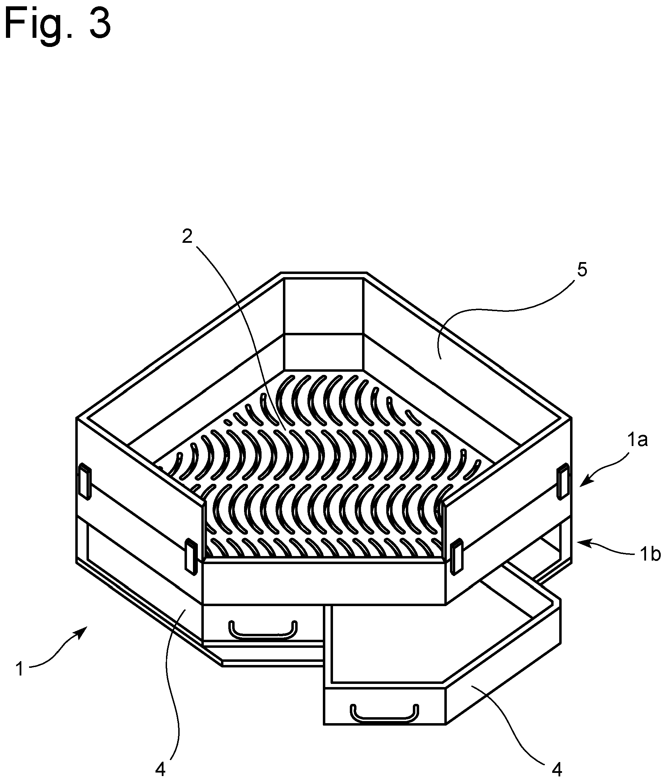

Der zweite Bereich 1b der wannenartigen Basis 1 ist nun erfindungsgemäß mit zumindest einer Schublade 4 ausgerüstet. Man erkennt anhand der Ausführungsbeispiele in den Fig. 1 und 3, dass die dargestellten Varianten mit jeweils zwei Schubladen 4 ausgerüstet sind, die lösbar in dem geschlossenen Bereich 1b der wannenartigen Basis 1 aufgenommen werden. Tatsächlich können die einzelnen Schubladen 4 aus dem geschlossenen Bereich 1b entnommen werden, um beispielsweise hierin gesammeltes und mit Fäkalien belastetes Streugut 3 zu entfernen und zu entsorgen. Die Variante nach der Fig. 3 ist im nach oben hin offenen Bereich 1a der wannenartigen Basis 1 noch mit einem optionalen Aufsatz 5 ausgerüstet, welcher verhindert, dass die das Sieb 2 mit dem darauf befindlichen Streugut 3 betretene Katze beim "Scharren" das Streugut 3 über den Rand des nach oben hin offenen Bereiches 1a hinausschleudert.

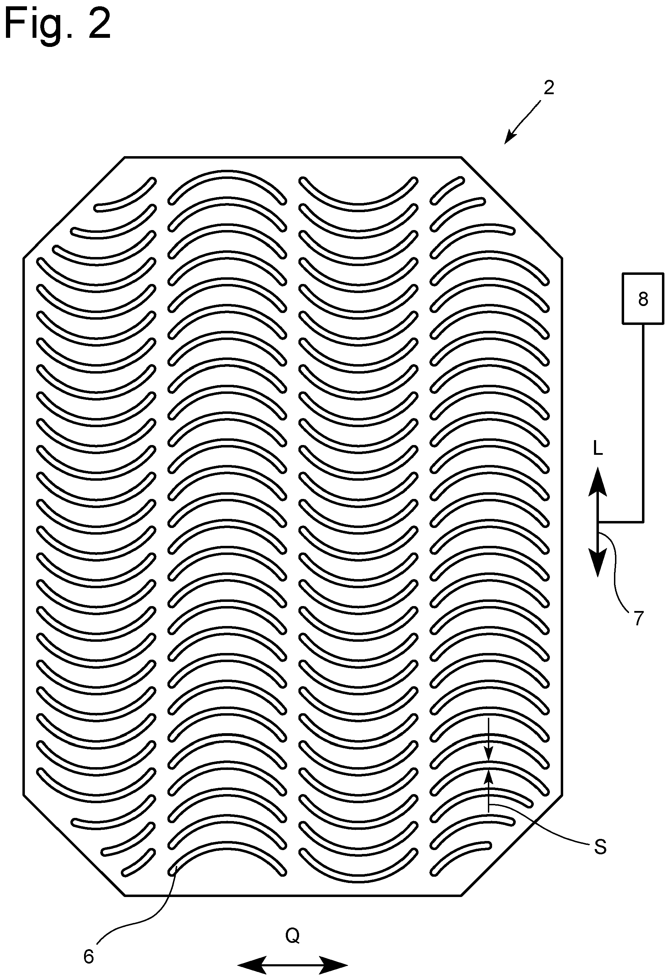

Von besonderer erfinderischer Bedeutung ist nun der Umstand, dass das Sieb 2 mit schlitzartigen Öffnungen 6 ausgerüstet ist. Durch diese schlitzartigen Öffnungen 6 kann das mit Fäkalien belastete Streugut 3 in die darunter befindliche Schublade 4 bzw. die beiden darunter befindlichen Schubladen 4 gelangen und wird in der betreffenden Schublade 4 gesammelt. Zu diesem Zweck handelt es sich bei dem erfindungsgemäß eingesetzten Streugut 3 um ein pflanzenbasiertes Streugut 3, welches in der Regel in Gestalt von Pellets, Spänen, Schnipseln etc. vorliegt und auf das Sieb 2 gestreut wird. Dabei können die einzelnen Pellets, Späne, Schnipsel oder dergleichen beispielsweise aus Holz, Sträuchern, Stroh etc. hergestellt sein und beispielsweise dem Abfall von Sägewerken, Gartenbauunternehmen, landwirtschaftlichen Betriebe etc. entstammen. Die an dieser Stelle möglichen Pellets lassen sich dabei wie allgemein üblich aus Holzmaterialien beim Pelletieren zu zylindrischen Materialsträngen pressen, die auf eine Länge von wenigen Zentimetern gebracht werden. Jedenfalls verfügt das an dieser Stelle eingesetzte Streugut 3 über eine Korngröße, die typischerweise eine in der Fig. 2 angedeutete Schlitzbreite S, der schlitzartigen Öffnungen 6 im Sieb 2 mehr oder minder deutlich übersteigt.

Tatsächlich beträgt die Schlitzbreite S im Rahmen des Ausführungsbeispiels weniger als 5 mm, kann auch Werte von 2 mm und weniger betragen. Die einzelnen Pellets, Späne, Schnipsel oder dergleichen des pflanzenbasierten Streuguts 3 sind nun von ihrer Korngröße her größer als die fragliche Schlitzbreite S ausgebildet, können folglich in trockenem und unbelasteten originäre Zustand nicht durch die Öffnungen 6 des Siebe 2 hindurch in die darunter befindlichen Schubladen 4 gelangen. Sobald jedoch das Streugut 3 insbesondere flüssige Fäkalien aufnimmt, zerfällt das Streugut 3 in eine mehlartige Substanz und kleinkörnige sowie die flüssigen Fäkalien aufnehmende Konglomerate, die zu Korngrößen korrespondieren, die im Allgemeinen unterhalb der fraglichen Schlitzbreite S angesiedelt sind.

Auf diese Weise können sich die kleinkörnigen Konglomerate aus dem mit flüssigen Fäkalien belasteten und in die mehlartige Substanz übergehenden Streuguts 3 in der Schublade 4 bzw. den beiden Schubladen 4 sammeln. Denn das in die mehlartige Substanz zerfallene pflanzenbasierte und mit den flüssigen Fäkalien belastete Streugut 3 ist in der Lage, die Öffnungen 6 im Sieb 2 der Schlitzbreite S passieren zu können. Es findet also seitens des pflanzenbasierten Streuguts 3 eine Verringerung seiner Korngröße statt, nämlich durch die Aufnahme der flüssigen Fäkalien, die bei der Benutzung der dargestellten Haustier-Sanitäreinrichtung insbesondere von einer Katze ausgesondert werden.

Demgegenüber werden im Beispielfall von der Katze ausgesonderte feste Fäkalien von den Öffnungen 6 des Siebes 2 zurückgehalten. Diese festen Fäkalien lassen sich von dem ebenfalls auf der Oberfläche des Siebes 2 zurückgehaltenen unbelasteten Streugut 3 problemlos mithilfe beispielsweise einer Schaufel oder anderweitig trennen. Dadurch lassen sich die festen Fäkalien einerseits und die flüssigen Fäkalien andererseits wirkungsvoll voneinander separieren und getrennt entsorgen, und zwar ohne dass unnötiges Streugut 3 verbraucht wird.

Zu diesem Zweck sind die Öffnungen 6 im Sieb 2 entsprechend der Darstellung in der Fig. 2 als langgestreckte Schlitze der Schlitzbreite S ausgebildet. Außerdem erkennt man anhand der Fig. 2, dass die Schlitze bzw. Öffnungen 6 bogenförmig ausgebildet sind. Dabei ist die Auslegung noch weiter so getroffen, dass mehrere Schlitze bzw. Öffnungen 6 in der in Fig. 2 angedeuteten Querrichtung Q des Siebes 2 jeweils mit Abstand aneinander anschließen. Außerdem sind die Schlitze bzw. Öffnungen 6 in der Querrichtung Q mit jeweils abwechselnder Krümmung angeordnet.

Auf diese Weise wird ein besonders wirkungsvoller Eintrag des durch die flüssigen Fäkalien belasteten Streuguts 3 in die unterhalb des Siebes 2 angeordnete Schublade 4 bzw. die beiden Schubladen 4 gewährleistet. Hierzu trägt ergänzend der Umstand bei, dass das Sieb 2 gegenüber der Wanne 1 hin-und herbewegbar ausgebildet sein kann. Zu diesem Zweck ist es denkbar, mit einem Antrieb 7 für das Sieb 2 zu arbeiten. Dieser Antrieb 7 ist in der Fig. 2 durch einen Doppelpfeil angedeutet und mag nach dem Ausführungsbeispiel dafür sorgen, dass das Sieb 2 in seiner in der Fig. 2 angedeuteten Längsrichtung L hin-und herbewegt wird. Zu diesem Zweck kann der Antrieb 7 einen Motor und wenigstens einen mit dem Sieb 2 verbundenen und nicht ausdrücklich dargestellten Exzenter aufweisen.

Darüber hinaus ist vorteilhaft noch eine Steuereinheit 8 vorgesehen, mit deren Hilfe der Antrieb 7 im Hinblick auf seine Drehzahl und/oder Drehrichtung veränderbar ausgebildet werden kann. Das heißt, mithilfe der Steuereinheit 8 kann der Antrieb 7 hinsichtlich seiner Drehzahl oder auch der Drehrichtung verändert werden. Eine solche Veränderung wird man im Allgemeinen in Abhängigkeit von der Menge an auf dem Sieb 2 befindlichem Streugut 3 vornehmen oder auch in Abhängigkeit des Verschmutzungsgrad des Streuguts 3 durch die von der Katze im Beispielfall ausgesonderten Fäkalien.

Anstelle des beschriebenen elektrischen Antriebes 7 kann selbstverständlich auch ein mechanischer Antrieb 7 eingesetzt werden. Denkbar ist hier eine Kurve mit Übersetzung. Ebenso kann an dieser Stelle auf einen mechanischen Antrieb 7 mit beispielsweise einem Energiespeicher in Gestalt einer Blattfeder zurückgegriffen werden. Die Blattfeder lässt sich ähnlich einem Uhrwerk aufziehen. Grundsätzlich sind natürlich auch Kombinationen aus einem mechanischen und elektrischen Antrieb 7 denkbar und werden von der Erfindung umfasst.

Man erkennt, dass das Sieb 2 plattenförmig ausgebildet ist. Außerdem empfiehlt es sich aus Gründen der Hygiene, dass das Sieb 2 metallisch und insbesondere aus einem nicht rostenden Metall hergestellt wird. Demgegenüber kommen sowohl für die Basis 1 als auch die hierin aufgenommenen Schubladen 4 Materialien wie beispielsweise Kunststoff, Laminate aus Holz und Kunststoff aber auch Metalle zu ihrer Realisierung infrage. Außerdem ist die Schublade oftmals oberseitig nach innen abgeschrägt ausgebildet, wobei in diesem Zusammenhang typischerweise mit einem Schrägwinkel von 45° gearbeitet wird.

Die an dieser Stelle vorgesehene Steuereinheit 8 kann dabei in Verbindung mit einer optischen Überwachung die Drehzahl und auch die Drehrichtung des Antriebes 7 je nach dem bereits beschriebenen Verschmutzungsgrad oder auch der Belegung mit dem Streugut 3 verändern. Darüber hinaus ist es denkbar, dass über die Steuereinheit 8 ein etwaiger automatischer Vorschub an Streugut 3 auf das Sieb 2 erfolgt. Darüber hinaus können nicht ausdrücklich dargestellte Sensoren beispielsweise an der Unterseite des Siebes 2 oder seitlich der Wanne 1 im Innern vorgesehen und angebracht werden, mit deren Hilfe der Füllstand an in der jeweiligen Schublade 4 aufgenommen und mit flüssigen Fäkalien belastetem Streugut 3 gemessen wird. Je nach dem dort beobachteten Füllstand kann über die Steuereinheit 8 eine Meldung oder optische Anzeige ebenso wie eine akustische Anzeige erfolgen.

Es versteht sich, dass das grundsätzlich pflanzenbasierte Streugut 3 prinzipiell auch mit Zusätzen behandelt werden kann, beispielsweise mit chemischen Zusätzen, um die Bindung der flüssigen Fäkalien an dem Streugut 3 zu erhöhen. Bei den fraglichen Zusätzen kann es sich aber auch um geruchsbindende Zusätze oder sogar deodorierende Zusätze handeln, die zur Verbesserung des Raumklimas dienen.

Nicht dargestellt ist die weitere Möglichkeit, dass der optionale Aufsatz 5 noch weiter nach oben hin gezogen und grundsätzlich geschlossen oder mit einer Öffnung ausgebildet werden kann. Dadurch wird die Austragung von Fäkalien oder Streugut 3 verhindert. Darüber hinaus sollte betont werden, dass sich die beschriebene Haustür-Sanitäreinrichtung sowohl für einen Einsatz im Innern als auch im Außenbereich eignet.

Nicht dargestellt ist die weitere Möglichkeit, das Sieb 2 zwei- oder mehrteilig auszubilden. Beispielsweise kann sich das Sieb 2 aus zwei gegeneinander bewegbaren Siebplatten mit jeweils Öffnungen 6 zusammensetzen. Dadurch lassen sich die Öffnungen 6 der mit dem Streugut 3 belegten Siebplatte mit der darunter befindlichen Siebplatte verschließen und nach einer Trocknungszeit öffnen. Das geschieht mit Hilfe des Antriebes 7 und der Steuereinheit 8.

## Patentansprüche

1. Haustier-Sanitäreinrichtung, insbesondere Katzentoilette, mit einer quaderförmigen wannenartigen Basis (1), und mit einem Sieb (2) zur Aufnahme eines Fäkalien bindenden Streuguts (3), wobei
das Sieb (2) die Basis (1) im Wesentlichen in einen ersten nach oben hin offenen Bereich (1a) und einen zweiten darunter liegenden geschlossenen Bereich (1b) unterteilt, wobei ferner
der zweite Bereich (1b) mit zumindest einer Schublade (4) ausgerüstet ist, in welcher durch Öffnungen (6) im Sieb (2) gelangende Streugutbestandteile gesammelt werden können, und wobei
das Sieb (2) gegenüber der wannenartigen Basis (1) hin-und herbewegbar ausgebildet ist,
**dadurch gekennzeichnet, dass**
- die Öffnungen (6) im Sieb (2) als langgestreckte Schlitze bestimmter Schlitzbreite (S) ausgebildet sind, wobei
- die Schlitze bogenförmig ausgebildet sind, und wobei
- die Schlitze in Querrichtung (Q) des Siebes (2) mit jeweils abwechselnder Krümmung angeordnet sind sowie mit Abstand aneinander anschließen.

2. Einrichtung nach Anspruch 1, **dadurch gekennzeichnet, dass** ein Antrieb (7) für das Sieb (2) vorgesehen ist.

3. Einrichtung nach Anspruch 2, **dadurch gekennzeichnet, dass** das Sieb (2) mithilfe des Antriebes (7) in seiner Längsrichtung (L) hin- und herbewegbar ist.

4. Einrichtung nach Anspruch 2 oder 3, **dadurch gekennzeichnet, dass** der Antrieb (7) neben einem Motor wenigstens einen mit dem Sieb (2) verbundenen Exzenter aufweist.

5. Einrichtung nach Anspruch 2 bis 4, **dadurch gekennzeichnet,**
**dass** der Antrieb (7) durch eine Steuereinheit (8) im Hinblick auf seine Drehzahl und/oder Drehrichtung veränderbar ausgebildet ist.

6. Einrichtung nach einem der Ansprüche 1 bis 5, **dadurch gekennzeichnet, dass** das Sieb (2) plattenförmig ausgebildet ist.

7. Einrichtung nach einem der Ansprüche 1 bis 6, **dadurch gekennzeichnet, dass** das Sieb (2) metallisch, insbesondere aus einem nicht rostende Metall, ausgebildet ist.

8. Einrichtung nach einem der Ansprüche 1 bis 7, **dadurch gekennzeichnet, dass** die Basis (1) und/oder die jeweiligen Schublade (4) aus Kunststoff, Holz, Metall einem Laminat aus Holz/Kunststoff hergestellt ist.

9. Einrichtung nach einem der Ansprüche 1 bis 8, **dadurch gekennzeichnet, dass** die Schublade (4) mit Seitenwänden ausgerüstet ist, die zumindest oberseitig nach innen abgeschrägt sind.

10. Einrichtung nach Anspruch 9, **dadurch gekennzeichnet, dass** die Seitenwände der Schublade (4) mit einem Schrägwinkel von ca. 45° abgeschrägt sind.

11. Kombination aus einer Haustier-Sanitäreinrichtung nach einem der Ansprüche 1 bis 10 sowie einem Fäkalien bindenden Streugut (3),
**dadurch gekennzeichnet, dass**
das Streugut (3) ausgelegt ist, im Gebrauch durch flüssige Fäkalien in eine mehlartige Substanz zu zerfallen.

12. Kombination nach Anspruch 11, **dadurch gekennzeichnet, dass** das Streugut (3) ausgelegt ist, im Gebrauch durch die flüssigen Fäkalien in die mehlartige Substanz überwiegend in Form von kleinkörnigen Konglomeraten zu zerfallen, die die Öffnungen (6) im Sieb (2) der Haustier-Sanitäreinrichtung passieren können.

13. Kombination nach Anspruch 11 oder 12, **dadurch gekennzeichnet, dass** die Schublade (4) der Haustier-Sanitäreinrichtung ausgelegt ist, die kleinkörnigen Konglomerate zu sammeln.

14. Kombination nach einem der Ansprüche 11 bis 13, **dadurch gekennzeichnet, dass** die Öffnungen (6) des Siebes (2) der Haustier-Sanitäreinrichtung ausgelegt sind, feste Fäkalien zurückzuhalten, so dass sie vom Sieb (2) entfernt werden können.

15. Kombination nach einem der Ansprüche 11 bis 14, **dadurch gekennzeichnet, dass** das Streugut (3) pflanzenbasiert aus beispielsweise Holz und/oder Sträuchern hergestellt ist und in Form von Pellets, Spänen, Schnipseln vorliegt.

## Claims

1. Sanitary facility for pets, more particularly cat toilet, with a cuboid, tray-like base (1) and with a screen (2) for receiving a grit material (3) that binds faecal matter, wherein
the screen (2) essentially divides the base (1) into a first area (1a) that is open at the top and a second, enclosed area (1b) underneath it, wherein further
the second area (1b) is provided with at least one drawer (4), in which grit particle components, reaching it through openings (6) in the screen (2) can be collected, and wherein
the screen (2) is designed to be moveable back and forth in relation to the tray-like base (1),
**characterised in that**
- the openings (6) in the screen (2) are in the form of elongated slits of a certain slit width (S), wherein
- the slits are arch-shaped in design and wherein
- the slits are arranged in the transverse direction (Q) of the screen (2) with alternating curvature and at a distance from one another.

2. Facility according to claim 1, **characterised in that** an actuator (7) for the screen (2) is provided.

3. Facility according to claim 2, **characterised in that** the screen (2) is moveable back and forth in its longitudinal direction (L) with the aid of the actuator (7) .

4. Facility according to claim 2 or 3, **characterised in that** in addition to a motor, the actuator (7) comprises at least one eccentric in connection with the screen (2).

5. Facility according to claim 2 to 4, **characterised in that** through a control unit (8) the actuator (7) is designed to be variable in terms of its speed and/or direction of rotation.

6. Facility according to any one of claims 1 to 5, **characterised in that** the screen (2) is plate-like in design.

7. Facility according to any one of claims 1 to 6, **characterised in that** the screen (2) is metallic, more particularly made of a non-rusting metal.

8. Facility according to any one of claims 1 to 7, **characterised in that** the base (1) and/or the respective drawer (4) is/are made of plastic, wood, metal, a wood/plastic laminate.

9. Facility according to any one of claims 1 to 8, **characterised in that** the drawer (4) is provided with side walls, which at least at the top are sloped inwards.

10. Facility according to claim 9, **characterised in that** side walls of the drawer (4) are sloped at an oblique angle of approximately 45°.

11. Combination of a sanitary facility for pets according to any one of claims 1 to 10 and a grit material (3) that binds faecal matter
**characterised in that**
when in use, the grit material (3) is designed to be broken down into a mealy substance by liquid faecal matter.

12. Combination according to claim 11, **characterised in that** when in use, the grit material (3) is broken down by the liquid faecal matter into the mealy substance predominantly in the form of small-particle conglomerates that can pass through the openings (6) in the screen (2) of the sanitary facility for pets.

13. Combination according to claim 11 or 12, **characterised in that** the drawer (4) of the pet sanitary facility is designed to collect the small-particle conglomerates.

14. Combination according to any one of claims 11 to 13, **characterised in that** the openings (6) of the screen (2) of the sanitary facility for pets are designed to hold back solid waste matter so that it can be removed from the screen (2).

15. Combination according to any one of claims 11 to 14, **characterised in that** the grit material (3) is produced plant-based from, for example, wood and/or shrubs and is present in the form of pellets, chips, trimmings.

## Revendications

1. Dispositif sanitaire pour animaux domestiques, notamment litière pour chats, doté d'une base (1) en forme de cuve parallélépipédique et doté d'une passoire (2), destinée à recevoir un produit d'épandage (3), liant les matières fécales
la passoire (2) divisant la base (1) sensiblement en une première zone (1a) ouverte sur le dessus et en une deuxième zone (1b) fermée sous-jacente, par ailleurs
la deuxième zone (1b) étant équipée d'au moins un tiroir (4), dans lequel, à travers des orifices (6), des composants du produit d'épandage arrivant dans la passoire (2) peuvent être collectés et
la passoire (2) étant réalisée de sorte à être déplaçable en aller et retour par rapport à la base (1) en forme de cuve,
**caractérisé en ce que**
- les orifices (6) dans la passoire (2) sont réalisés sous la forme de fentes allongées d'une largeur (S) de fente déterminée
- les fentes étant réalisées de forme curviligne et
- dans la direction transversale (Q) de la passoire (2), les fentes étant placées avec une courbure respectivement alternée et se raccordant les unes aux autres avec un écart.

2. Dispositif selon la revendication 1, **caractérisé en ce qu'**il est prévu un entraînement (7) pour la passoire (2).

3. Dispositif selon la revendication 2, **caractérisé en ce que** la passoire (2) est déplaçable en aller et retour dans sa direction longitudinale (L) à l'aide de l'entraînement (7).

4. Dispositif selon la revendication 2 ou 3, **caractérisé en ce que** l'entraînement (7) comporte, hormis un moteur, au moins un excentrique relié avec la passoire (2).

5. Dispositif selon la revendication 2 à 4, **caractérisé en ce que** l'entraînement (7) est réalisé en étant modulable au niveau de sa vitesse de rotation et / ou de sa direction de rotation par une unité de commande (8).

6. Dispositif selon l'une quelconque des revendications 1 à 5, **caractérisé en ce que** la passoire (2) est réalisée en forme de plaque.

7. Dispositif selon l'une quelconque des revendications 1 à 6, **caractérisé en ce que** la passoire (2) est métallique, est réalisée notamment en un métal inoxydable.

8. Dispositif selon l'une quelconque des revendications 1 à 7, **caractérisé en ce que** la base (1) et / ou le tiroir (4) respectif est fabriqué en matière plastique, en bois, en métal ou en un stratifié bois / matière plastique.

9. Dispositif selon l'une quelconque des revendications 1 à 8, **caractérisé en ce que** le tiroir (4) est équipé de parois latérales, qui au moins sur la face supérieure sont biseautées vers l'intérieur.

10. Dispositif selon la revendication 9, **caractérisé en ce que** les parois latérales du tiroir (4) sont biseautées avec un angle oblique d'environ 45°.

11. Association d'un dispositif sanitaire pour animaux domestiques selon l'une quelconque des revendications 1 à 10 et d'un produit d'épandage (3) liant les matières fécales,
**caractérisé en ce que**
le produit d'épandage (3) est conçu, pour lors d'une utilisation en présence de matières fécales liquides, se décomposer en une substance farineuse.

12. Association selon la revendication 11, **caractérisé en ce que** le produit d'épandage (3) est conçu pour, lors d'une utilisation en présence des matières fécales liquides se décomposer en la substance farineuse, majoritairement sous le forme de conglomérats à grains fins, qui sont aptes à passer les orifices (6) dans la passoire (2) du dispositif sanitaire pour animaux domestiques.

13. Association selon la revendication 11 ou 12, **caractérisé en ce que** le tiroir (4) du dispositif sanitaire pour animaux domestiques est conçu pour collecter les conglomérats à grains fins.

14. Association selon l'une quelconque des revendications 11 à 13, **caractérisé en ce que** les orifices (6) de la passoire (2) du dispositif sanitaire pour animaux domestiques sont conçus pour retenir les matières fécales solides, de sorte qu'elles puissent être retirées de la passoire (2).

15. Association selon l'une quelconque des revendications 11 à 14, **caractérisé en ce que** le produit d'épandage (3) est à base végétale, est fabriqué par exemple en bois et / ou en buissons et se présente sous la forme de boulettes, de copeaux, de flocons.
